(19) Europäisches Patentamt
European Patent Office
Office européen des brevets

(11) EP 3 245 748 B1

(12) **EUROPEAN PATENT SPECIFICATION**

(45) Date of publication and mention
of the grant of the patent:
**18.08.2021 Bulletin 2021/33**

(21) Application number: **16737015.4**

(22) Date of filing: **04.01.2016**

(51) Int Cl.:
*H04B 10/80* (2013.01)    *H04B 10/2575* (2013.01)
*H04B 10/50* (2013.01)    *H04B 10/516* (2013.01)
*H04J 14/02* (2006.01)

(86) International application number:
**PCT/CN2016/070059**

(87) International publication number:
**WO 2016/112789 (21.07.2016 Gazette 2016/29)**

(54) **OPTICAL POWER SUPPLY AND A SYSTEM FOR SUMMATION OF PARALLEL MODULATED SIGNALS OF DIFFERENT WAVELENGTHS**

OPTISCHE STROMVERSORGUNG UND SYSTEM ZUR SUMMIERUNG VON PARALLELEN MODULIERTEN SIGNALEN MIT UNTERSCHIEDLICHEN WELLENLÄNGEN

ALIMENTATION ÉNERGÉTIQUE OPTIQUE ET SYSTÈME POUR SOMMATION DE SIGNAUX MODULÉS PARALLÈLES DE LONGUEURS D'ONDE DIFFÉRENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2015 US 201514595849**
**29.05.2015 US 201514726037**

(43) Date of publication of application:
**22.11.2017 Bulletin 2017/47**

(73) Proprietor: **Huawei Technologies Co., Ltd.**
**Shenzhen, Guangdong 518129 (CN)**

(72) Inventors:
• **CELO, Dritan**
**Ottawa, Ontario K2J 5N8 (CA)**
• **GOODWILL, Dominic John**
**Ottawa, Ontario K2M 2V4 (CA)**
• **SVILANS, Mikelis**
**Ottawa, Ontario K2K 3E5 (CA)**

(74) Representative: **Pfenning, Meinig & Partner mbB**
**Patent- und Rechtsanwälte**
**Theresienhöhe 11a**
**80339 München (DE)**

(56) References cited:
WO-A1-2014/021258    WO-A1-2014/121443
JP-A- 2009 124 342    US-A1- 2010 315 273
US-A1- 2011 052 209    US-A1- 2014 133 868
US-A1- 2014 321 864    US-B1- 8 588 556
US-B1- 8 588 556

**Description**

**BACKGROUND**

Mobile communication networks transmit data to one or more devices (e.g., mobile phone, tablet computer, etc.) using radio frequency (RF) signals. The RF signals are radiated from a transmission antenna, which is located at a cellular tower or transmission site. It may be desirable to reduce the amount of equipment proximate the transmission antenna or at the transmission site. To do so, the equipment used to create an analog signal that drives the transmission antenna is located remotely from the transmission antenna with cabling between the locations. By way of example, the equipment used to create the analog signal may be disposed at the base of the cellular tower or at a location a few kilometers or tens of kilometers away from the cellular tower.

It can be challenging to carry the analog signal over electrical cabling, due to the large weight and poor signal integrity of electrical cables. Therefore, the analog signal may be carried on an optical fiber using an optical carrier. This and similar arrangements are known as a radio-over-fiber (RoF) system or an RF-over-fiber system.

US 2010/215273 A1 describes a digital-to-analog converter (DAC) includes multiple electro-optical converters to generate multiple first optical signals in response to multiple input signals, multiple optical attenuators to attenuate intensities of the first optical signals and to generate multiple second optical signals, an optical coupler to combine the second optical signals and to generate a third optical signal, and a photodetector to convert the third optical signal into an electrical analog signal.

US 8 588 556 B1 describes an apparatus, comprising a substrate with a planar surface an optical power splitter on the surface, and an optical power combiner on the surface. The apparatus also comprises pairs of optical waveguides located on the planar surface, each waveguide of the pairs connecting a corresponding output of the optical power splitter to a corresponding input of the optical power combiner. The apparatus also comprises a plurality of optical resonators located on the surface, each of the resonators of the plurality being evanescently coupled to a corresponding one of the waveguides. For each particular one of the pairs, resonant frequencies of the optical resonators coupled to the waveguides of the particular one of the pairs are about the same. Resonant frequencies of each pair of the optical resonators coupled to two of the waveguides in different ones of the pairs are different.

In US 2014/133868 A1 an optical modulator includes a splitter, phase modulators, amplitude modulators, intensity modulators, and a combiner. The splitter is configured to receive light, and split the light into portions of the light. Each of the phase modulators is configured to receive a corresponding one of the portions of the light, and modulate a phase of the portion of the light to provide a phase-modulated signal. Each of the amplitude modulators is configured to receive a corresponding one of the phase-modulated signals, and modulate an amplitude of the phase-modulated signal to provide an amplitude-modulated signal. Each of the intensity modulators is configured to receive a corresponding one of the amplitude-modulated signals, and modulate an intensity of the amplitude-modulated signals to provide an intensity-modulated signal. The combiner is configured to receive the intensity-modulated signals, combine the intensity-modulated signals into a combined signal, and output the combined signal.

US 2014/321864 A1 describes improving the Signal to Noise and Distortion (SINAD) ratio in Pulse Amplitude Modulation (PAM)-M optical intensity modulation systems, to enable higher data rate communications, are provided. Embodiments can be used to improve the linearity and reduce the distortion of electrical and electro-optics components (including optical modulators) in optical intensity modulation systems. Embodiments are well suited for use with PAM-M optical intensity modulators, such as segmented Vertical Cavity Surface Emitting Laser (WSEL) and segmented Mach-Zehnder Modulator (MZM), for example.

**SUMMARY**

The above objects are solved by the subject-matter according to the independent claims. The following presents a simplified summary of some aspects or embodiments of the invention in order to provide a basic understanding of the invention. This summary is not an extensive overview of the invention. It is not intended to identify key or critical elements of the invention or to delineate the scope of the invention. Its sole purpose is to present some embodiments of the invention in a simplified form as a prelude to the more detailed description that is presented below.

In accordance with one aspect of the present disclosure there is provided an optical power supply that includes a plurality of lasers each providing an output at a respective optical wavelength and optical power and a plurality of optical splitter groups, each comprising an input associated with a respective one of the plurality of lasers and splitting

$$Power_n = \frac{1}{x^n} Power_{input},$$

the input into a plurality of outputs each having an output power approximated by
where: $x$ is an integer greater than 1; $n$ is a number of the outputs of the optical splitter group and $n = 1..\,m$; $m$ is a total number of outputs of the optical splitter group; $Power_n$ is the output power of the $n^{th}$ output; and $Power_{input}$ is the optical power of the output of the laser received at the input of the optical splitter group.

In accordance with another aspect of the present disclosure there is provided an optical system having an optical splitting section including a plurality of optical splitter groups, each comprising an input and splitting the input into

$$Power_n = \frac{1}{x^n} Power_{input},$$

a plurality of outputs each having an output power approximated by where: $x$ is an integer greater than 1; $n$ is a number of the outputs of the optical splitter group and $n$ = 1..m; m is a total number of outputs of the optical splitter group; $Power_n$ is the output power of the $n^{th}$ output; and $Power_{input}$ is the optical power received at the input of the optical splitter group. The system also includes an optical modulation section comprising a plurality of optical modulator groups each comprising a plurality of modulator inputs and associated modulator outputs, each of the modulator groups modulating optical inputs according to an associated bit of a respective one of a plurality of data signals; and an optical interconnect section connecting individual outputs of the optical splitter groups to individual modulator inputs of the optical modulator groups, each of the plurality of modulator inputs of a respective optical modulator group connected to a respective output from different optical splitting groups such that, for each modulator group, data bit $data_i$ modulates the optical input having the $(w - i)^{th}$ highest optical power of the optical modulator group, where: $data_i$ is the $i^{th}$ bit in the data signal and $i$ = 0..w - 1, where $data_{w-1}$ is the most significant bit; and $w$ is the number of bits in the data signal.

In one embodiment, the disclosure includes an optical transmitter including a first optical modulator configured to modulate a first optical carrier signal having a first wavelength and a first power using a first data bit to generate a first modulated output signal, a second optical modulator configured to modulate a second optical carrier signal having a second wavelength and a second power using a second data bit to generate a second modulated output signal, wherein the second optical modulator and the first optical modulator modulate in parallel, and an optical wavelength multiplexer configured to sum the first modulated output signal and the second modulated output signal into an analog signal suitable for transmission over an optical link.

In another embodiment, the disclosure includes an optical transmitter including optical modulators configured to modulate optical carrier signals each having a different wavelength, wherein modulation by the optical modulators is performed in parallel on the optical carrier signals from a highest power optical carrier signal modulated using a most significant bit of a digital signal through a lowest power optical carrier signal modulated using a least significant bit of the digital signal to generate modulated output signals, and an optical wavelength multiplexer configured to sum the modulated output signals into an analog signal suitable for transmission to an analog photoreceiver over an optical fiber.

In yet another embodiment, the disclosure includes a method of optical transmission including modulating, using one optical modulator, an optical carrier signal having a first wavelength and a highest power using a most significant bit to generate a modulated output signal, modulating, using another optical modulator, another optical carrier signal having a different wavelength and a next-highest power using a next most significant bit to generate another modulated output signal, repeating the modulating, using a further optical modulator, until modulating a final optical carrier signal having a final wavelength with a lowest power using a least significant bit to generate further modulated output signals, and combining all of the modulated output signals into a modulated analog signal suitable for transmission over an optical fiber.

These and other features will be more clearly understood from the following detailed description taken in conjunction with the accompanying drawings and claims.

## BRIEF DESCRIPTION OF THE DRAWINGS

Embodiments are described herein with reference to the appended drawings, in which:

Figure 1 is a schematic diagram of an embodiment of a RF-over-fiber system in which embodiments of the invention may be utilized;

Figure 2 depicts components of an optical power system for a digital-to-analog communication link;

Figure 3 depicts components of an optical splitter that may be used in the optical power system;

Figure 4 depicts components of a further optical splitter that may be used in the optical power system;

Figure 5 depicts components of an optical modulator that may be used in the optical power system;

Figure 6 depicts components of the digital-to-analog communication link;

Figure 7 depicts components of a further optical power system for a digital-to-analog communication link;

FIG. 8 is a schematic diagram of an embodiment of an optical transmitter within an optical system, configured to perform modulation in parallel;

FIG. 9 is a schematic diagram of an embodiment of an optical transmitter on a photonic integrated circuit;

FIG. 10 is a schematic diagram of an embodiment of an optical transmitter including four optical modulators and a 4-bit digital signal;

FIG. 11 is a schematic diagram of an embodiment of optical splitters dividing optical carrier signals from lasers for use by four of the optical transmitters; and

FIG. 12 is a flowchart of an embodiment of an optical transmission method.

## DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Disclosed herein is an optical transmitter configured to perform modulation of optical signals in parallel in an optical system. As will be more fully explained below, the optical transmitter is able to modulate optical carrier signals having different wavelengths and different powers using bits from a digital signal to generate modulated output signals. The modulated output signals are combined into an analog signal, which may be transmitted to a photoreceiver over an optical fiber. In other words, the optical transmitter is able to perform a digital-to-analog conversion in a manner suitable to handle newer generations of mobile communications technology, such as the fifth generation (5G) mobile communications technology.

In a mobile communication network, data is transmitted to mobile devices using a radio frequency (RF) transmitter. An analog RF signal is provided to a transmission antenna that radiates the signal to the respective communication clients. The analog RF signal may be provided to a cellular tower, or transmission site, in various ways. For example, the analog signal may be communicated to the transmission site as a digital representation of the desired analog signal. An analog signal may then be synthesized from the digital signal and power amplified to provide the RF signal for driving the transmission antenna.

Alternatively, an analog signal may be transmitted to the transmission site. When an analog signal is used to transmit the data to the transmission site, it is not necessary to perform digital-to-analog conversion at the transmission site. The analog signal may be transmitted to the transmission site as an analog optical signal over fiber optic cables. The analog optical signal may be transmitted a greater distance than an electrical signal without suffering signal degradation. Accordingly, the digital-to-analog conversion of the transmission signal may be performed remote from the transmission antenna and transmitted as an optical signal. The optical analog signal may then be converted to an electrical signal and amplified in order to drive the transmission antenna. If there are multiple transmission antennae, then multiple optical signals may be used; although it is possible for a single analog signal to drive multiple transmission antennae. Similarly, a single transmission antenna may be driven by multiple analog signals. When a single antenna is driven by multiple analog signals, the analog signals may drive the single antenna at different times, or the analog signals may have non-overlapping wavelengths to allow driving the same antenna at the same time. The use of analog optical signals for transmitting the signals for driving the transmission antennae may reduce the amount of equipment at the transmission antennae since it is not necessary to first convert a digital signal to an analog signal.

The digital signal may comprise a time series of digital words, providing a digital word stream. Each digital word may comprise a plurality of data bits, providing a plurality of digital bit streams. A digital signal may be converted to an analog optical signal by modulating an optical carrier wave so that the optical power of the carrier wave corresponds to the magnitude of the digital signal. An optical power supply provides unmodulated optical carrier wave that can be modulated according to the digital signal.

The analog signal may be provided as a modulated carrier wave of a single wavelength, or may be provided as a multiplexed signal of a plurality of carrier waves. When a single analog signal is provided by multiplexing a plurality of individual optical carrier waves together, each optical carrier wave used for an analog signal may have a different wavelength and may be modulated according to a bit of the digital signal. The modulated optical carrier waves may then be multiplexed together into a single analog optical signal corresponding to the data signal.

To carry multiple analog signals that emanate from the same location, there may be multiple digital-to-analog transmitters that synthesize an optical analog signal from a digital signal. Multiple high-power lasers may provide optical carrier waves at respective wavelengths. The optical carrier waves output by the lasers may be shared across the multiple digital-to-analog transmitters by means of optical power splitting before the carrier waves are modulated by the digital signal.

The use of a relatively small number of high-powered lasers to provide all of the optical carrier waves for modulating multiple analog signals may provide savings in terms of cost and/or size. That is, a small number of high-power lasers may be less costly than a large number of low-power lasers. Similarly, a small number of high-power lasers may require less space than a large number of low-power lasers, which may simplify the installation of the required components. Further, the technical requirements of the analog RF signal for transmission, and so the technical requirements of the analog optical signal, may be demanding. In particular, the lasers providing the optical carrier waves should have very low relative intensity noise (RIN) in the important frequency range, which in the case of wireless transmissions, such as cellular transmission, is in the range of one gigahertz (GHz). Meeting the requirements may be easier, and possibly more cost effective, using a small number of high-powered lasers, as the RIN of a laser generally decreases in the important frequency range as the laser is operated at higher power. Further, the use of high-powered lasers may provide sufficiently high optical power to overcome photon statistical shot noise at the receiver.

As described further below, an optical power system for use in a digital-to-analog optical transmission environment may include a number of high-powered lasers, each of differing wavelengths. In an embodiment, the output of each of the lasers at the output port has a different power. In another embodiment, the output of the lasers is split into a number of ports each with differing power. Each of the output ports may be modulated according to a bit of a data signal. The modulated optical carrier waves for the bits of a data signal may then be multiplexed together to provide the analog optical signal for transmission. As described in further detail below, different optical wavelengths provided from different lasers may be used to modulate individual bits of a particular signal.

Although discussion is provided below with the terminology used in 3G/4G networks, including reference to Base Station Controllers, Radio Network controllers and Base transceiver stations, it should be understood that other names for similar nodes and functions may be appropriate. A separation of the antennas, often referred to as a remote radio head, from the network access point which generates the analog representations of digital signals for transmissions, can be useful in future generations of wireless networks and can enable different architectures.

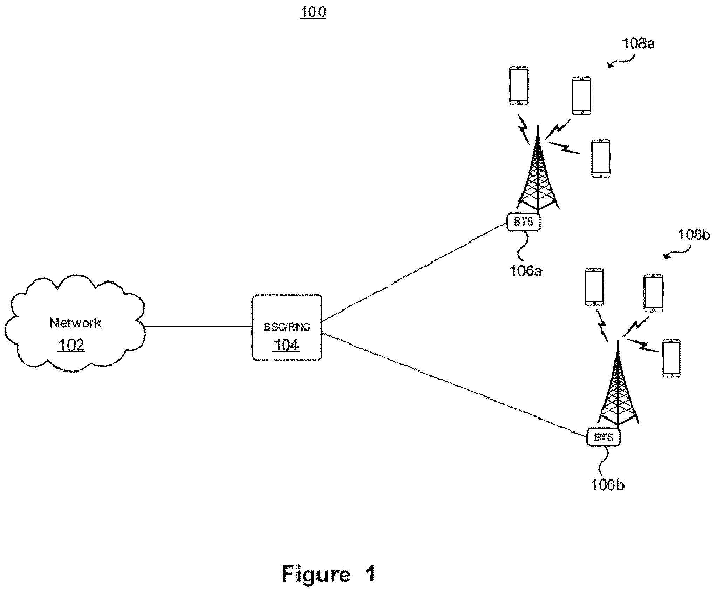

Figure 1 depicts a mobile communication network in which embodiments of the present disclosure may be utilized. The mobile communication network includes a network 102, which may include various systems for controlling and coordinating the communication network. For example, the network 102 may include computing devices for providing data or other services, such as a web server. Although depicted as exterior to the network 102, the additional components depicted in Figure 1 may be considered as part of the network 102.

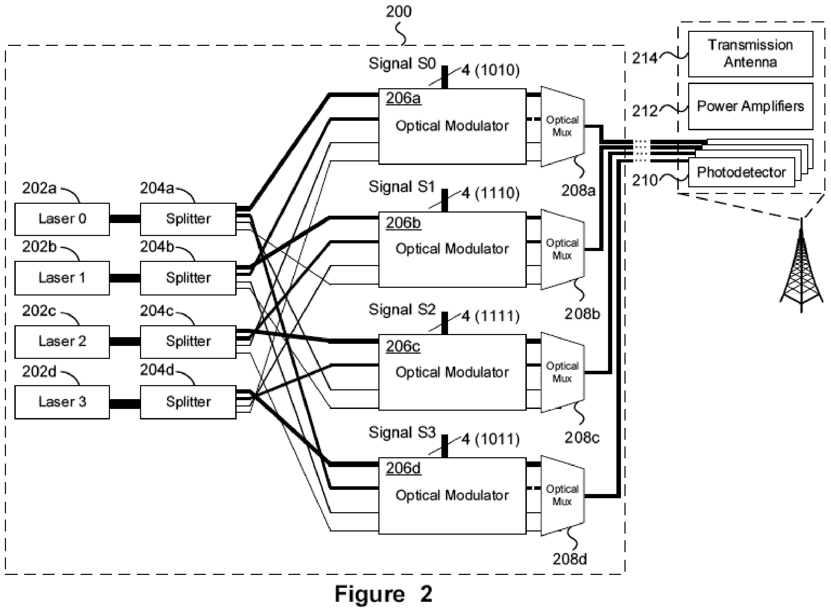

Base station controllers (BSC) and/or radio network controllers (RNC) 104, depending upon the network technology, control a number of transmission sites. The controller 104 communicates with communication equipment located at the transmission site, depicted as base transceiver stations (BTS) 106a, 106b (referred to collectively as BTS 106). Broadly, the BTS 106 receives data for transmission from, for example, controller 104 and provides the analog RF signal for driving a transmission antenna (e.g., transmission antenna 210 in Figure 2). The transmitted RF signals are received by one or more mobile devices 108a, 108b (referred to collectively as devices 108) associated with the respective BTS 106. The devices 108 may be mobile phone, tablet computers, and so on.

Previously, the analog signal for driving the transmission antenna was generated in close proximity to the transmission antenna in order to avoid signal degradation caused by transmission of an analog electrical signal. Accordingly, communication equipment for performing the digital-to-analog conversion was required at the transmission antenna. By providing the analog signal as an optical signal, longer transmission lengths are possible without significant signal degradation. Accordingly, it is possible to place the digital-to-analog conversion equipment at a location remote from the transmission antenna, and only provide optical to electrical conversion components and power amplifiers in the vicinity of the transmission antenna.

The optical transmitter described herein may be used in providing the analog signals for use in driving transmission antennae. The optical transmitter may include an optical power system that provides unmodulated optical carrier waves at different power levels and wavelengths using a relatively small number of high powered lasers. The outputs from the lasers may be split into a number of ports and the carrier waves from the ports may be modulated according to bits of the digital signals. The generated optical analog signals may be transmitted a relatively short distance, for example from the base of a transmission tower to the top of the transmission tower where the antenna is located. Additionally, or alternatively, the analog optical signal may be transmitted a longer distance such as a few kilometers or tens of kilometers. Regardless of the specific length of transmission of the analog optical signal, the optical transmitter described herein may be used in generating analog optical signals from a digital representation of the signal for transmission remote from the transmission antenna location. The analog optical signals may be transmitted over a transmission fiber, which may be a fiber optic cable.

The environment 100 depicted in Figure 1 is an oversimplification of a mobile communication network intended to provide a basic overview of an environment in which the optical power system may be used. Further, although described in terms of its use in a mobile communication network, the optical transmitter described further herein may be used in other applications in which it is desirable to provide analog optical signals that are synthesized from digital representations. Such applications may include, for example, cable television head-end transmission, supplying wireless communications to remote areas, or areas where wireless backhaul is not available, as well as other possible applications. In the environment 100 of Figure 1, applications may also include transmission of signals in the direction from the antenna (see the antenna 214 of Figure 2) toward the BTS 106.

Figure 2 depicts components of an analog optical transmitter system. As will be described in more detail below, the analog optical transmitter system 200 may include an optical power supply that provides unmodulated optical carrier waves to optical modulators that modulate the carrier waves according to digital signals. The optical power supply may include a number of high-power lasers 202a, 202b, 202c, 202d (referred to collectively as lasers 202) and a plurality of optical splitter groups 204a, 204b, 204c, 204d (referred to collectively as optical splitter groups 204). The output of each laser is connected to a respective one of the optical splitter groups 204. Each of the optical splitter groups 204 splits the input into a number of output ports of differing power, which is represented schematically by the thickness of the line in Figure 2.

The output ports of the optical splitter groups 204 are connected to modulator inputs of a number of optical modulator groups 206a, 206b, 206c, 206d (referred to collectively as optical modulator groups 206). Each of the optical modulator groups 206 modulate the optical carrier waves from the inputs according to individual bits of respective digital signals S0 - S3 associated with the respective one of the optical modulator groups 206.

The optical modulator groups 206 provide output ports for the modulated optical carrier waves and the output ports are connected to respective optical multiplexer groups 208a, 208b, 208c, 208d (referred to collectively as optical multiplexer groups 208). Each of the optical multiplexer groups 208 multiplex the modulated optical carrier waves from one of the optical modulator groups together into a single analog optical signal that can be transmitted over a fiber optic transmission link.

The analog optical signals provided by the optical multiplexers 208 may be transmitted to a transmission antenna location, where a respective photo detector 210 converts the optical signal into a corresponding electrical signal. The electrical signals from the photo detectors 210 may be amplified by power amplifiers 212 and the amplified signals used to drive transmission antennas 214. The analog optical transmitter system 200 may be located remote from the transmission antenna 214. For example, the analog optical transmitter system 200 may be located at a base of a cellular tower on which the transmission antenna 214 is located. Additionally or alternatively, the analog transmitter system 200 may be located remotely from the transmission site. The lasers 202 may be co-located with the optical modulators 206 and optical multiplexers 208, or may be located separately from other components such as the splitter groups 204, optical modulator groups 206 and optical multiplexers 208. The performance of the lasers 202 may be more susceptible to changing environmental conditions and as such may be located in a more highly regulated environment to ensure optimal, or at least acceptable operation is maintained. The optical splitter groups, optical modulators and optical multiplexers may be more robust with regard to sensitivity to environmental conditions and as such may be located in a wider range of locations. The optical splitter groups, optical modulators and optical multiplexers may located together or separately and may be co-located with the lasers 202 of may be located separately.

Figure 2 depicts 4 lasers 202 used to modulate 4 data signals S0 - S3, which are transmitted over respective transmission links to the photo detectors 210 in the vicinity of the transmission antenna 214. Similarly, each of the optical modulator groups 206 are depicted as modulating a 4 bit word. The optical power system 200 is depicted using 4 lasers to modulate 4 digital signals each of 4 bits for clarity and simplicity of the Figure. The analog optical transmitter system 200 may be extended to convert more digital signals each having more bits into corresponding analog optical signals. Generally, the number of bits in a word being modulated may correspond to the number of output ports provided by each of the optical splitter groups 204, although such correspondence is not necessary. Similarly, the number of optical fiber transmission links between the analog optical transmitter system 200 and the photo detectors may correspond to the number of lasers in the optical system 200. If the number of fiber optic transmission links is not equal to the number of bits in a word, there may be more laser wavelengths than the number of bits. If there is a large number of fiber optic transmission links, then there may be multiple lasers of each wavelength, and the laser power delivery fibers may be assigned across all of the fiber optic transmission links, or the fiber optic transmission links may be handled in subsets.

The optical lasers 202 may be provided by different types of lasers. For example, the lasers may be distributed feedback (DFB) semiconductor lasers, fiber lasers or other types of lasers. Although different types of lasers may be used, fiber lasers may be desirable as they are capable of providing low optical noise, which may be advantageous for an analog optical link having high dynamic range. Typically, fiber lasers provide higher powered output than necessary for modulating a single bit of a data signal.

The optical splitter groups 204 of the analog optical transmitter system 200 split the outputs of the lasers 202 into a number of outputs that are distributed to different optical modulator groups 206. The optical carrier waves output from each of the lasers 202 may have substantially the same optical power, but at different wavelengths. Each of the digital signals are modulated by an individual optical modulator group 206, with each bit of the particular digital signal being used to modulate an optical carrier wave having a different wavelength and power from other bits of the data signal. For example, optical modulator 206a is depicted as receiving 4 different un-modulated carrier waves from the optical splitter groups 204. Each of the carrier waves of the optical modulator 206a may be a different wavelength as well as a different power. The optical modulator 206a modulates the highest powered optical carrier wave power using the most significant bit of the digital signal. The second highest powered optical carrier wave is modulated with the second most significant bit of the digital signal. The second lowest powered optical carrier wave is modulated with the second least significant bit of the digital signal, and the lowest powered optical carrier wave is modulated with the least significant bit of the digital signal.

In order to avoid generating beat frequencies when the modulated optical carrier waves are multiplexed together, the wavelengths of the optical carrier waves must be sufficiently separated. Practical optical carrier wave separation is 100GHz or 200GHz, because lasers and optical multiplexers with such separation are commonly available from manufacturers of dense wavelength division multiplexing components, or 500GHz to 2THz using commonly available coarse wavelength division multiplexing components. The practical optical carrier separation is sufficient to avoid beating between the modulated optical signals.

The un-modulated optical carrier waves output of each of the lasers 202 is provided to a respective one of the optical splitter groups 204 that splits the input to the splitter group into a number of output ports that provide individual optical carrier waves of differing optical power that may be used in modulating the data bits of digital signals. Each of the optical splitter groups 204 is arranged so that each of the output ports provides approximately ½ the optical power of the previous output port, with the first output port having approximately ½ the optical power of the input. That is, each optical splitter group is arranged so that the power of each of the output port is approximately:

$$Power_n = \frac{1}{x^n} Power_{input},$$

where:

$x$ is an integer greater than 1;
$n$ is a number of the output port of the optical splitter group and $n = 1..m$;
$m$ is a total number of output ports of the optical splitter group;
$Power_n$ is the optical power of the $n^{th}$ output port; and
$Power_{input}$ is the optical power of the output of the laser received at the input of the optical splitter group.

In the above equation, x is generally selected to be 2 so that the power of the output ports provides a binary sequence of powers. Although a binary sequence of power outputs may be conveniently used to modulate binary digital signals, other fractional sequences of the power output may be useful in other scenarios.

When the modulated optical carrier waves from a modulation group are multiplexed together into the analog optical signal, the total optical power of the optical analog signal across all wavelengths is proportional to the amplitude of the digital signal, which in turn is a digital representation of a desired analog signal for driving an antenna. Accordingly, when the analog optical signal is detected by the associated photo detector 210 and converted into an electrical signal, the resultant electrical signal corresponds to the desired analog signal for driving the antenna.

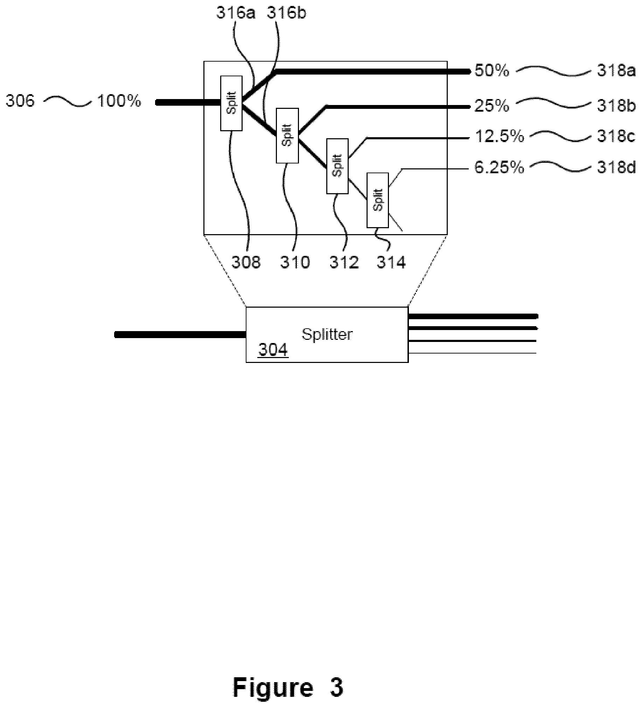

Figure 3 depicts components of an optical splitter group that may be used in the optical power system. The optical splitter group 304 may be used for the optical splitter groups 204. The optical splitter group 304 is arranged as an asymmetric tree of individual optical splitters 308, 310, 312, 314 that each split the power of the received optical carrier into two optical carrier waves. The optical splitters 308, 310, 312, 314 are depicted as spitting the optical power into nearly equal optical carrier waves. As depicted the input optical signal 306 is split in approximately half by the first individual optical splitter 308 into two outputs 316a, 316b. One of the outputs, 316a, is provided as the highest power output 318a of the optical splitter group 304 and provides approximately ½ the optical power of the input. The second output, 316b, of the initial optical splitter 308 is provided as input to a second optical splitter 310, which in turn splits the input into two outputs, one of which is provided as the output 318b of the optical splitter group. The second output is provided to the input of the third optical splitter 312, which splits the input into two outputs, one of which is provided as the output 318c of the optical splitter group. The second output is provided to the input of the fourth optical splitter 314, which splits the input into two outputs, one of which is provided as the output 318d of the optical splitter group. The second output of the last optical splitter may not used. Although only 4 optical splitters are depicted in Figure 3, additional splitters may be included in order to provide sufficient outputs of the optical splitter group.

As described above, the outputs 318a, 318b, 318c, 318d (referred to collectively as outputs 318) are provided by near 50/50 optical splitters 308, 310, 312, 314. However, in practice, it is desirable for the power to be split slightly unevenly so that more power is provided to the output branch having the additional optical splitters to account for optical power loss in each splitter. Although the outputs 318 are depicted as a percentage of the input, it will be appreciated that these may be approximations that assume the optical splitters are perfect 50/50 splitters. The individual optical splitters are arranged so that each of the outputs has ½ the power of the preceding output. The highest power output may be approximately 50% the power of the input; however, it may be slightly less so that more power is provided to the branch having additional optical splitters. The additional power accounts for optical losses incurred by each of the optical splitters.

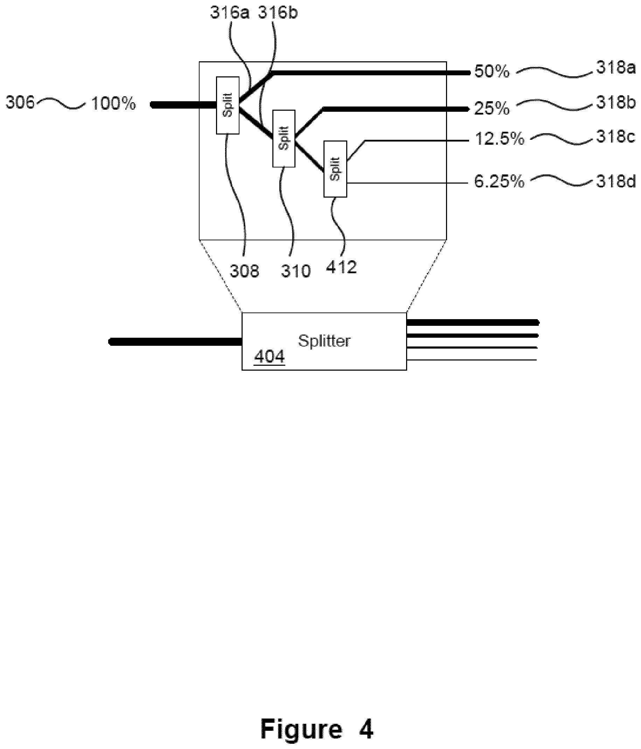

Figure 4 components of an alternative optical splitter group that may be used in the optical power system. The optical splitter group 404 is substantially similar in functionality to the optical splitter group described in Figure 3. However, as depicted in Figure 3, individual optical splitter 314 spits the optical carrier wave into two optical carrier waves, one of which is not used. In order to reduce an amount of wasted optical power, the last optical splitter 314 may be omitted and the approximate 50/50 optical splitter 312 may be replaced with optical splitter 412 that splits the optical power unevenly into the final outputs 318c, 318d. Optical splitter 412 may spit the optical power in an approximate 67:33 ratio so that approximately 2/3 of the optical power is provided to output 318c and approximately 1/3 of the optical power is provided to optical output 318d. Generally, the number of individual optical splitters in an optical splitter group may be one less than the number of output ports of the group.

Returning to Figure 2, the outputs of the optical splitter groups 204 are connected to different optical modulator groups 206. Each of the optical modulators 206 modulates each bit of the respective data signal S0 - S3 using a different laser wavelength. The modulated wavelengths are multiplexed by a respective optical multiplexer 208 to provide the analog optical signal that is transmitted over an optical transmission link. Since the bits of each data signal are modulated using optical signals whose power is a binary sequence, the power across all wavelengths of the multiplexed optical signal is an analog representation of the data signal.

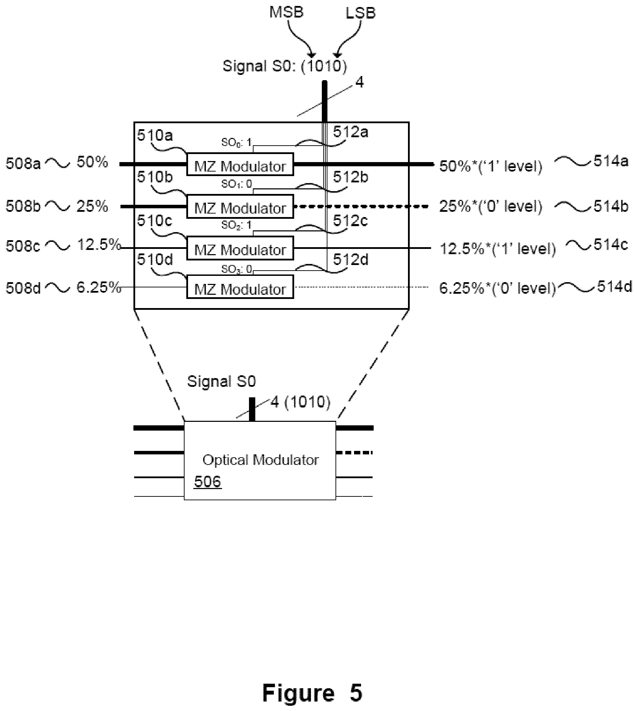

Figure 5 depicts components of an optical modulator group that may be used in the optical power system. The optical modulator group 506 may be used for the optical modulator groups 206 described above in Figure 2. The optical modulator group 506 receives a plurality of inputs 508a, 508b, 508c, 508d (referred to collectively as inputs 508). Each of the inputs 508 is modulated according to a single bit of the data signal being transmitted. As depicted in Figure 5, the signal S0 being transmitted comprises 4 bits, which are depicted as the bit string '1010', and as such the optical modulator group 506 comprises 4 inputs 508 and modulators. Generally, the number of inputs and associated individual modulators will correspond to the number of bits of the digital signal. However, it is possible to configure a modulator with more inputs and individual modulators to be used to modulate a digital signal with fewer bits. The inputs 508 receive respective un-modulated optical carrier waves from the optical splitter groups associated with different laser. Accordingly, each of the inputs is associated with a different wavelength. Further, the power provided by the optical splitter groups to each of the inputs differs. For example, the first input 508a receives an optical carrier wave of a first wavelength at approximately ½ the optical power output by the lasers. Similarly, the second input 508b receives an optical carrier wave of a second wavelength at approximately 1/4 the optical power output by the lasers. The third input 508c receives an optical carrier wave of a third wavelength at approximately 1/8 the optical power output by the lasers. The fourth input 508d receives an optical carrier wave of a fourth wavelength at approximately 1/16 the optical power output by the lasers. As depicted in Figure 2, the different power outputs provided by an individual optical splitter group are distributed to different optical modulator groups, which provides for sharing of the optical power from a powerful laser among multiple optical modulator groups.

The optical modulator group 506 includes a number of individual optical modulators 510a, 510b, 510c, 510d (referred to collectively as optical modulators 510) for modulating the optical signal from a respective one of the inputs in accordance with a corresponding bit of the data signal. The optical modulator group 506 modulates the highest power optical input, namely input 508a, using the most significant bit, $S0_3$ 512a, of the digital signal. The optical modulator group 506 modulates the second highest power optical input, namely input 508b, using the second most significant bit, $S0_2$ 512b, of the digital signal. The optical modulator group 506 modulates the second lowest power optical input, namely input 508c, using the second least significant bit, $S0_1$ 512c, of the digital signal. The optical modulator group 506 modulates the lowest power optical input, namely input 508d, using the least significant bit, $S0_0$ 512d, of the digital signal. The optical modulator group 506 provides the modulated input carrier waves as outputs 514a, 514b, 514c, 514d of the modulator group.

The individual optical modulators 510 may be provided by a Mach-Zehnder (MZ) modulator. The individual optical modulators 510 modulate the power of the respective input carrier wave based on the associated bit of the digital signal. The output of each individual modulator will depend upon the optical power of the input carrier wave and the bit value. This is represented in Figure 5 by the respective optical power of the input (50%, 25%, 12.5%, 6.25%) multiplies by the modulation level for a '0' bit or a '1' bit.

Returning to Figure 2, the outputs of each optical modulator group 206 are combined together into analog optical signals. Optical multiplexer groups 208 are associated with each of the optical modulator groups 206 in order to provide an analog optical signal corresponding to the data signal modulated by the optical multiplexer group. The outputs from each of the optical multiplexers 208 is transmitted to the transmission site over a respective fiber optic transmission link. Each fiber optic transmission link carries an analog optical signal. A number of carrier waves of different wavelengths are combined together at the optical multiplexer in order to provide the analog optical signal corresponding to a digital signal representation of a driving signal. A photo detector may detect the analog optical signal provide an electrical output that is proportional to the optical power of all wavelengths of the analog optical signal. The resultant electrical signal from the photo detector corresponds to an analog electrical signal of the digital signal.

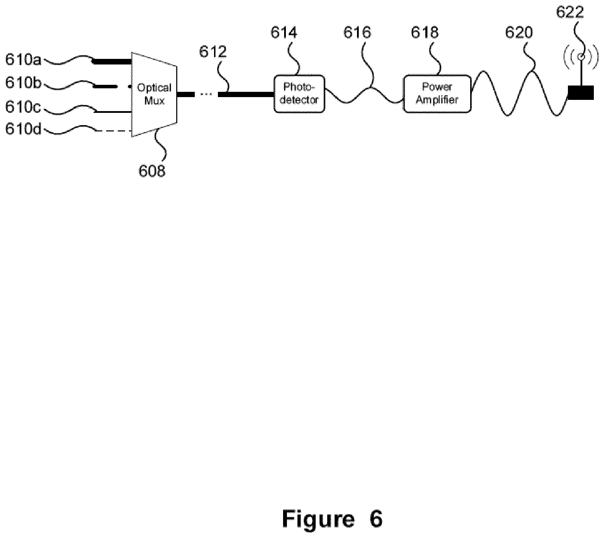

Figure 6 depicts components of the digital-to-analog communication link. As depicted by way of example in Figure 6, an optical multiplexer 608 receives a plurality of inputs 610a, 610b, 610c, 610d (referred to collectively as inputs 610) from an optical multiplexer group, such as the optical multiplexer groups depicted in Figure 2. The inputs 610 correspond to individual bits of a data signal, which is depicted as being a 4-bit signal. The inputs 610 are received at the optical multiplexer 608 and combined together into a single optical signal 612. Each of the optical signals of the input 610 may have different wavelengths that are separated from each other in order to avoid generating any beat frequencies in the output when combined together. The combined optical signal 612 is transmitted over a transmission link to a photo detector 614. The photo detector generates an electrical signal 616 having an amplitude corresponding to the total power across all wavelengths of the combined optical signal 612. The electrical signal 616 may be amplified by one or more power amplifier components 618 to provide an analog driving signal 620 that is provided to the transmission antenna 622, and causes the transmission antenna 622 to radiate the RF signal.

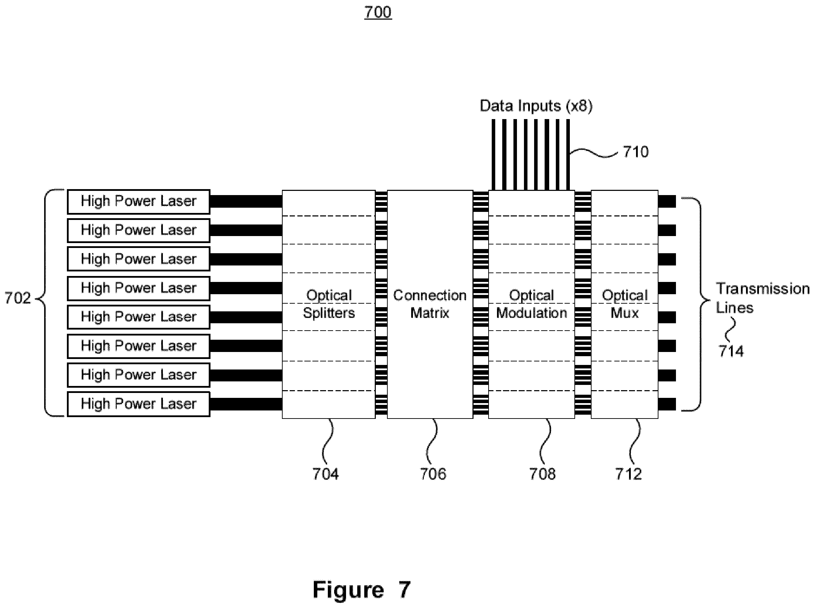

Figure 7 depicts components of a further optical power system for a digital-to-analog communication link. The optical power system 700 converts digital data signals to corresponding analog optical signals that may be transmitted to a receiver over individual transmission lines. The optical power system 700 comprises a plurality of high-power lasers 702. The number of high-power lasers may correspond to the number of data signals being converted to corresponding analog signals. Each of the high-power lasers 702 generate an optical signal with a particular wavelength and power. The wavelength generated by each of the high-power lasers 702 is different, and may be separated from other wavelengths by a sufficient distance to avoid generating beat frequencies when the optical signals are combined. The power of each of the optical signals generated by each of the different lasers 702 is substantially the same.

The output of each of the lasers 702 is provided to an optical splitter section 704. The optical splitter section may comprise a number of individual optical splitters arranged in optical splitter groups to provide a plurality of optical outputs for each input from the lasers 702. The optical splitter section 704 splits each of the inputs into a plurality of output ports so that the optical power of the output ports are a binary sequence. The highest power output port may be some fraction of the input power provided by the laser, which is described as approximately ½ the input power for convenience, although it need not be ½ half the input power. The power of each subsequent output is ½ the power of the next highest power output. The number of output ports the optical splitter sections provides for each laser input may correspond to the number of bits in the data signals being modulated. For example, if the data signal comprises an 8-bit signal, the optical splitter section 704 may split each laser input into 8 output ports. The output power of the 8 ports would be approximately proportional to $\frac{1}{2^1}, \frac{1}{2^2}, \frac{1}{2^3}, \frac{1}{2^4}, \frac{1}{2^5}, \frac{1}{2^6}, \frac{1}{2^7}, \frac{1}{2^8}$ of the input power. The output power summed across all 8 channels would be approximately equal to the total input power minus the optical losses incurred by the optical splitters.

The individual outputs from the optical splitter section 704 may be provided to a connection matrix section 706 that connects the outputs to individual inputs of an optical modulation section 708. The connection matrix section 706 may be provided in various manners including as optical waveguides or individual optical fibers. Regardless of the specific manufacture of the connection matrix, the plurality of output channels of the optical splitter section 704 are connected to individual modulator inputs of the optical modulation section 708.

The optical modulation section 708 receives the outputs from the optical splitter section 704 and modulates the individual optical signals according to the data inputs 710. As depicted, the optical modulation section 708 receives 8 data signals, each of which may comprise 8 bits. If the optical splitter section splits the optical signal from each laser into 8 output channels, the optical modulation section 708 modulates the optical signals as depicted in Table 1.

Table 1- Table showing optical signal assignment for bit modulation

| Data Signal | Bit | Wavelength | Power | Data Signal | Bit | Wavelength | Power |
|---|---|---|---|---|---|---|---|
| 1 | 7 (MSB) | WL1 | 1/2 | 2 | 7 (MSB) | WL2 | 1/2 |
| 1 | 6 | WL2 | 1/4 | 2 | 6 | WL3 | 1/4 |
| 1 | 5 | WL3 | 1/8 | 2 | 5 | WL4 | 1/8 |

(continued)

| Data Signal | Bit | Wavelength | Power | Data Signal | Bit | Wavelength | Power |
|---|---|---|---|---|---|---|---|
| 1 | 4 | WL4 | 1/16 | 2 | 4 | WL5 | 1/16 |
| 1 | 3 | WL5 | 1/32 | 2 | 3 | WL6 | 1/32 |
| 1 | 2 | WL6 | 1/64 | 2 | 2 | WL7 | 1/64 |
| 1 | 1 | WL7 | 1/128 | 2 | 1 | WL8 | 1/128 |
| 1 | 0 (LSB) | WL8 | 1/256 | 2 | 0 (LSB) | WL1 | 1/256 |
| 3 | 7 (MSB) | WL3 | 1/2 | 4 | 7 (MSB) | WL4 | 1/2 |
| 3 | 6 | WL4 | 1/4 | 4 | 6 | WL5 | 1/4 |
| 3 | 5 | WL5 | 1/8 | 4 | 5 | WL6 | 1/8 |
| 3 | 4 | WL6 | 1/16 | 4 | 4 | WL7 | 1/16 |
| 3 | 3 | WL7 | 1/32 | 4 | 3 | WL8 | 1/32 |
| 3 | 2 | WL8 | 1/64 | 4 | 2 | WL1 | 1/64 |
| 3 | 1 | WL1 | 1/128 | 4 | 1 | WL2 | 1/128 |
| 3 | 0 (LSB) | WL2 | 1/256 | 4 | 0 (LSB) | WL3 | 1/256 |
| 5 | 7 (MSB) | WL5 | 1/2 | 6 | 7 (MSB) | WL6 | 1/2 |
| 5 | 6 | WL6 | 1/4 | 6 | 6 | WL7 | 1/4 |
| 5 | 5 | WL7 | 1/8 | 6 | 5 | WL8 | 1/8 |
| 5 | 4 | WL8 | 1/16 | 6 | 4 | WL1 | 1/16 |
| 5 | 3 | WL1 | 1/32 | 6 | 3 | WL2 | 1/32 |
| 5 | 2 | WL2 | 1/64 | 6 | 2 | WL3 | 1/64 |
| 5 | 1 | WL3 | 1/128 | 6 | 1 | WL4 | 1/128 |
| 5 | 0 (LSB) | WL4 | 1/256 | 6 | 0 (LSB) | WL5 | 1/256 |
| 7 | 7 (MSB) | WL 7 | 1/2 | 8 | 7 (MSB) | WL 8 | 1/2 |
| 7 | 6 | WL8 | 1/4 | 8 | 6 | WL1 | 1/4 |
| 7 | 5 | WL1 | 1/8 | 8 | 5 | WL2 | 1/8 |
| 7 | 4 | WL2 | 1/16 | 8 | 4 | WL3 | 1/16 |
| 7 | 3 | WL3 | 1/32 | 8 | 3 | WL4 | 1/32 |
| 7 | 2 | WL4 | 1/64 | 8 | 2 | WL5 | 1/64 |
| 7 | 1 | WL5 | 1/128 | 8 | 1 | WL6 | 1/128 |
| 7 | 0 (LSB) | WL6 | 1/256 | 8 | 0 (LSB) | WL7 | 1/256 |

The modulated output for each bit of the data signals is provided to an optical multiplexer section 712 that combines the individual modulated outputs for a data signal into a single optical signal that may be transmitted over a corresponding transmission line 714.

In the embodiments illustrated by way of example in Figures 2 to 7, the apparatus for providing optical power to multiple wavelength additive analog transmission includes a bank (or group) of lasers, whose power is split in binary sequence by optical splitters, coupled to a bank (or group) of modulators. In these embodiments, the output of each laser is split unequally into separate laser delivery fibers. A ratio of optical power in the fibers is a power of 2 sequence times the lowest power. The wavelength assignment per bit rotates so that all the optical power is utilized.

In one implementation, a variable optical attenuator may be provided on each power splitter output waveguide to compensate for imperfect splitting ratios and any variations in optical modulator transmission and amplitude-response. Alternatively, or additionally, the attenuator may be combined with a feedback monitor, e.g. a feedback monitor having a digital signal processor (DSP).

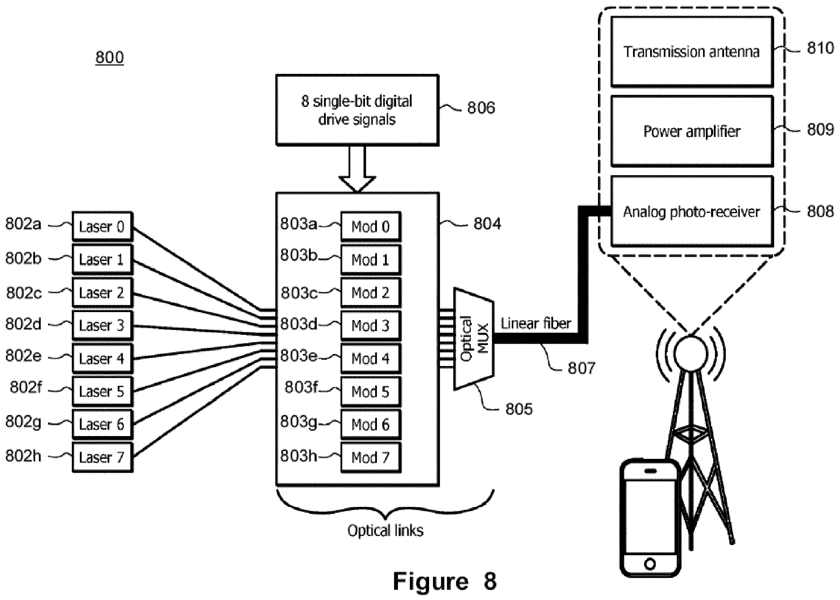

Figure 8 depicts components of an embodiment of an analog optical transmitter system. The analog optical transmitter system 800 may include an optical power supply, e.g. similar to the power system 200 of Figure 2 or 700 of Figure 7, that provides unmodulated optical carrier waves to optical modulators that modulate the carrier waves according to digital signals. The optical power supply may comprise a number of high-power lasers 802a, 802b, 802c, 802d, 802e, 802f, 802g, and 802h (referred to collectively as lasers 802). While eight lasers 802 are shown, any number of lasers may be used. Each of the lasers 802 outputs an unmodulated optical carrier signal of differing power and differing wavelength, which is represented schematically by the lines in Figure 8.

The unmodulated optical carrier signals of differing power and wavelength are transmitted to input ports of an optical transmitter 804. While one optical transmitter 804 is shown in Figure 8, optical transmitter systems 800 may include any number of optical transmitters. The optical transmitter 804 in Figure 8 includes a bank of eight single-bit optical modulators 803a, 803b, 803c, 803d, 803e, 803f, 803g, and 803h (referred to collectively as optical modulators 803). However, any number of optical modulators 803 may be included in the optical transmitter 804. In some embodiments, the optical modulators 803 are digital drive Mach-Zehnder interferometers, which may also be referred to as Mach-Zehnder modulators. In some embodiments, the optical modulators 803 are 8-bit modulators, 4-bit modulators, 3-bit modulators, 2-bit modulators, single-bit modulators, or combinations thereof. As will be more fully explained below, the optical modulators 803 within the optical transmitter 804 are configured to perform modulation on the optical carrier signals in parallel. In some embodiments, the modulators 803 have a similar high-state transmission and a similar low-state transmission.

The optical transmitter 804 is configured to receive a digital data signal from a driver 806. The digital signal may include a single data bit or a plurality of data bits. For example, the drive signal may be a single-bit drive signal, a two-bit drive signal, a three-bit drive signal, a four-bit drive signal, an eight-bit drive signal, and so on. The driver 806 in Figure 8 provides the optical transmitter 804 with eight single-bit digital drive signals. Each single-bit drive signal is intended for and received by one of the eight single-bit optical modulators 803 within the optical transmitter 804. In other words, each of the eight single-bit optical modulators 803 within the optical transmitter 804 receives one of the eight single-bit drive signals output by the driver 806.

In an embodiment, the optical modulator 803a within the optical transmitter 804 modulates an optical carrier signal from laser 802a having a first wavelength and a first power using a first data bit from the driver 806 to generate a first modulated output signal. In similar fashion, the optical modulator 803b modulates an optical carrier signal from laser 802b having a second wavelength and a second power using a second data bit received from the driver 806 to generate a second modulated output signal, the optical modulator 203c modulates an optical carrier signal from laser 802c having a third wavelength and a third power using a third data bit received from the driver 806 to generate a third modulated output signal, and so on.

Each optical carrier signal beats with each other optical carrier signal. The signals in the optical link 807 are digital optical signals. The analog waveform is created in the analog photoreceiver 808. To achieve a high signal-to-noise ratio in the analog signal, the bandwidth of each digital optical signal may be much larger than the bandwidth of the analog signal.

In an embodiment, the wavelength of each unmodulated optical carrier signal is separated from other wavelengths by a frequency difference sufficient that the beat frequencies are larger than the transmission spectrum of each digital optical signal on the optical link 807. For example, the wavelength separation may be 100 GHz. In an embodiment, a second power is half of the first power, a third power is half of the second power, and so on. For example, in an embodiment a first optical carrier signal has a power of 50%, a second optical carrier signal has a power of 25%, a third optical carrier signal has a power of 12.5%, and so on.

The eight modulated output signals collectively generated by the optical modulators 803a are output to an optical wavelength multiplexer 805 at eight output ports as shown in Figure 8. The optical wavelength multiplexer 805 is configured to sum the eight modulated output signals received from the optical modulators 803 into an analog signal suitable for transmission over an optical fiber 807. In an embodiment, the optical wavelength multiplexer 805 is an arrayed waveguide grating (AWG). In an embodiment, the optical wavelength multiplexer 805 is a Y-junction tree. In an embodiment, the optical wavelength multiplexer 805 is a cascade of thin-film optical filters. The choice of AWG or Y-junction tree or cascade of thin-film optical filters may be determined based on insertion loss and power handling requirements.

As shown in Figure 8, the combined modulated analog signal output from the optical wavelength multiplexer 805 is conveyed to an analog photoreceiver 808 over the optical fiber 807. The analog photoreceiver 808, which may also be referred to as a photodetector, may be disposed within a BTS similar to BTS 106 of Figure 1. The analog photoreceiver 808 generates an electrical signal having an amplitude corresponding to the total power across all wavelengths of the combined analog signal received from the optical wavelength multiplexer 805. The particular wavelengths used herein are not important because the photodetector 808 only detects a total power summed across all wavelengths. The electric signal generated by the photodetector 808 based on the received analog signal may be amplified by one or more power amplifiers 809 to provide an analog driving signal. The analog drive signal is provided to the transmission antenna 810, which causes the transmission antenna 810 to radiate an RF signal. Because of the arrangement and function of components as described herein, there is no need for an optical demultiplexer at the photoreceiver 808. Indeed, the photoreceiver 808 detects the sum total optical power as a function of time and, therefore, produces an analog waveform.

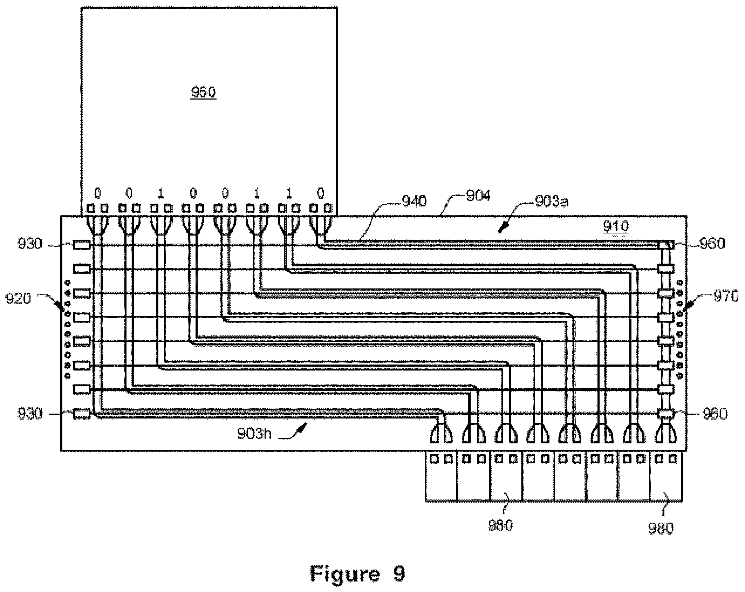

Figure 9 depicts an optical transmitter 904 configured on a photo integrated circuit (PIC) 910. The optical transmitter 904 may be similar to the optical transmitter 804 of Figure 8. The optical transmitter 904 includes multiple wavelength optical input ports 920. The optical input ports 920 may be edge or surface grating coupled. While eight of the optical input ports 920 are shown, any number of optical inputs may be used. The optical input ports 920 are configured to receive the unmodulated optical carrier signals from, for example, the lasers 802 shown in Figure 8.

The optical input ports 920 provide the unmodulated optical carrier signals to the optical modulators 903. The optical modulators 903 may be similar to the optical modulators 803 in Figure 8. As represented in Figure 9, the optical modulators 903 are Mach-Zehnder modulators, each comprising an optical power splitter 930 having two dual output optical waveguides, an optical phase shifter 940 acting upon one or both of said dual optical waveguides, and an optical power combiner 960. The optical phase shifter 940 is driven by an electrical digital signal from the driver chip 950. The optical output ports 970 convey the modulated signal from each Mach-Zehnder optical modulator toward an optical multiplexer which may be similar to the optical multiplexer 805 in Figure 8. By changing the relative optical phase of the two optical waveguides at the optical power combiner 960, the Mach-Zehnder optical modulator produces an amplitude-modulated optical signal, according to the electrical signal applied by the driver chip 950.

As shown in Figure 9, the driver chip 950 is configured to provide an eight-bit digital signal (e.g., '00100110'). However, the driver chip 950 may be configured to provide a digital signal with any number of bits. Each of the optical modulators 903 in Figure 9 is a single-bit modulator, meaning that the optical modulators are configured to modulate the unmodulated optical carrier signal in the optical waveguide 940 with a single data bit. However, in other embodiments the optical modulators 903 may be configured to accommodate additional bits. In such cases, the driver chip 950 provides a digital signal with a corresponding number of bits.

For example, if the optical modulators 903 are two-bit modulators and there are eight of them, the driver chip 950 provides a digital signal with 16 total bits.

As shown in Figure 9, the dual waveguide 940 of the upper optical modulator 903a is the least significant bit phase shifter while the dual waveguide 940 of the lower optical modulator 903h is the most significant bit phase shifter. The bits disposed between the most significant bit and the least significant bit are provided, in order, to the optical modulators 903 positioned between the upper and lower optical modulators 903 in Figure 9. In other embodiments, the arrangement of the most significant bit phase shifter, the least significant bit phase shifter, and the other phase shifters in between may be different.

In an embodiment, the drive signals from the driver chip 950 pass through the PIC 910, as noted above, to termination resistor chips 980. In an embodiment, the termination resistor chips 980 are remotely located relative to the PIC 910.

The optical modulators 903 of Figure 9 use the data bits in the digital signals provided by the driver chip 950 to modulate the optical carrier signals passing through the waveguides 940. Because the optical carrier signals were split by the splitters 930, the optical carrier signals are recombined by an optical combiner 960 within each optical modulator 903 to generate the modulated optical carrier signals. The modulated optical carrier signals are then provided to optical outputs 970. While eight of the optical outputs 970 are shown, any number of optical outputs may be used. The number of optical outputs 970 corresponds to the number of optical inputs 920. The optical outputs 970 are configured to output the modulated optical carrier signals from the optical transmitter 904. In an embodiment, the optical outputs 970 provide the modulated optical carrier signals to a multiplexer such as, for example, the multiplexer 805 of Figure 8.

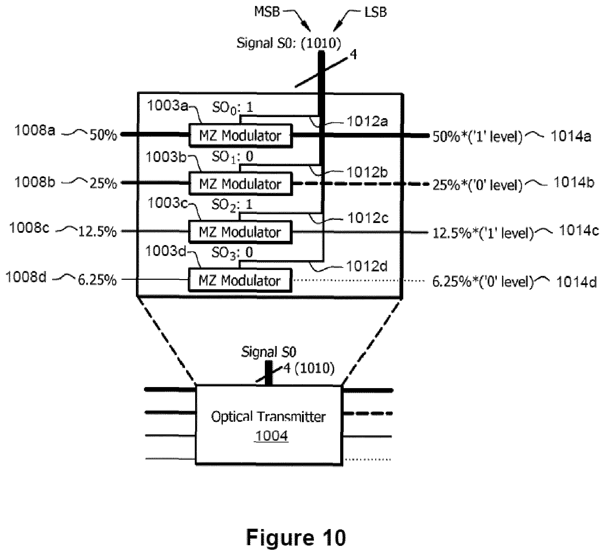

Figure 10 is an embodiment of an optical transmitter 1004 having four one-bit optical modulators 1003. The optical transmitter 1004 and optical modulators 1003 may be similar to the optical transmitter 804, 904 and optical modulators 803, 903 in Figures 8 and 9, respectively. The optical transmitter 1004 receives a plurality of inputs 1008a, 1008b, 1008c, 1008d (referred to collectively as inputs 1008). Each of the inputs 1008 is modulated according to a single bit of the data signal being transmitted. As depicted in Figure 10, the signal S0 being transmitted comprises 4 bits, which are depicted as the bit string '1010', and as such the optical transmitter 1006 comprises four inputs 1008 and modulators 1003. Generally, the number of inputs and associated individual modulators will correspond to the number of bits of the digital signal. However, it is possible to configure a modulator with more inputs and individual modulators to be used to modulate a digital signal with fewer bits. The inputs 1008 receive respective unmodulated optical carrier waves from the optical splitter groups associated with different laser. Accordingly, each of the inputs is associated with a different wavelength. Further, the power provided by the lasers to each of the inputs differs. For example, the first input 1008a receives an optical carrier wave of a first wavelength at approximately 50% the optical power output by the lasers. Similarly, the second input 1008b receives an optical carrier wave of a second wavelength at approximately 25% the optical power output by the lasers. The third input 1008c receives an optical carrier wave of a third wavelength at approximately 12.5% the optical power output by the lasers. The fourth input 1008d receives an optical carrier wave of a fourth wavelength at approximately 6.25% the optical power output by the lasers.

The optical transmitter 1004 includes a number of individual optical modulators 1003a, 1003b, 1003c, 1003d (referred to collectively as optical modulators 1003) for modulating the optical signal from a respective one of the inputs in accordance with a corresponding bit of the data signal. The optical modulator 1003a modulates the highest power optical input, namely input 1008a, using the most significant bit, S0o 1012a, of the digital signal. The optical modulator 1003b modulates the second highest power optical input, namely input 1012b, using the second most significant bit, $S0_1$ 1012b, of the digital signal. The optical modulator 1003c modulates the second lowest power optical input, namely input 1008c, using the second least significant bit, S02 1012c, of the digital signal. The optical modulator 1003d modulates the lowest power optical input, namely input 1008d, using the least significant bit, $S0_3$ 1012d, of the digital signal. The optical modulators 1003 collectively provide the modulated input carrier waves as outputs 1014a, 1014b, 1014c, 1014d.

The individual optical modulators 1003 modulate the power of the respective input carrier wave based on the associated bit of the digital signal. The output of each individual modulator will depend upon the optical power of the input carrier wave and the bit value. This is represented in Figure 10 by the respective optical power of the input (50%, 25%, 12.5%, 6.25%) multiplied by the modulation level for a '0' bit or a '1' bit.

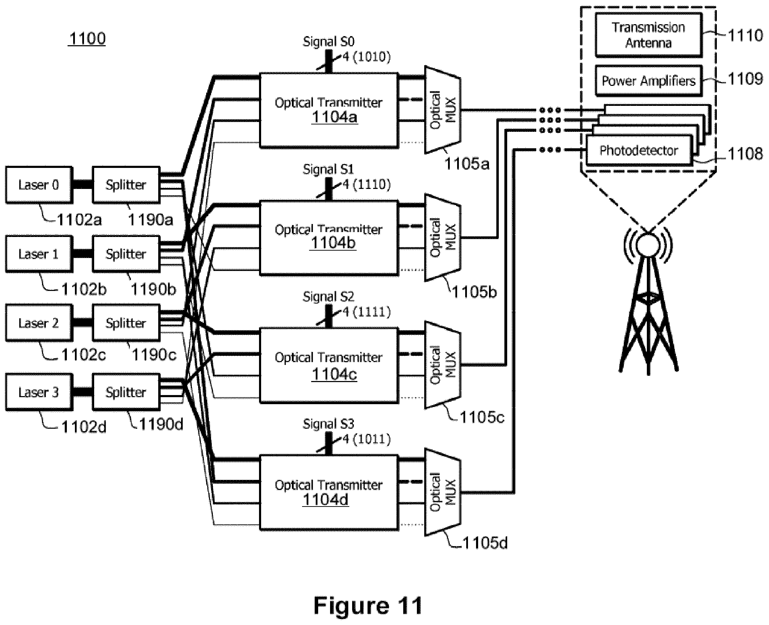

Figure 11 depicts components of an analog optical transmitter system. The analog optical transmitter system 1100 is similar to the optical system 800 of Figure 8. The system 1100 comprises an optical power supply that provides unmodulated optical carrier waves to optical transmitters 1104 that each use a bank of optical modulators (not shown) to modulate the carrier waves according to digital signals. The optical transmitters 1104 in Figure 11 are similar to the optical transmitter 1004 of Figure 10.

The optical power supply may comprise a number of high-power lasers 1102a, 1102b, 1102c, 1102d (referred to collectively as lasers 1102) and a plurality of optical splitters 1190a, 1190b, 1190c, 1190d (referred to collectively as optical splitters 1190). The output of each laser is connected to a respective one of the optical splitters 1190. Each of the optical splitters 1190 splits the input into a number of output ports of differing power, which is represented schematically by the thickness of the line in Figure 11. For example, the thickest line may represent 50% power, the second thickest line may represent 25% power, the second thinnest line may represent 12.5% power, and the thinnest line may represent 6.25% power.

The output ports of the optical splitters 1190 are connected to modulator inputs of a number of optical transmitters 1104a, 1104b, 1104c, 1104d (referred to collectively as optical transmitters 1104). Each of the optical transmitters 1104 modulate the optical carrier waves from the inputs according to individual bits of respective digital signals SO-S3 associated with the respective one of the optical transmitters 1104.

The optical transmitters 1104 provide output ports for the modulated optical carrier waves and the output ports are connected to respective optical multiplexers 1105a, 1105b, 1105c, 1105d (referred to collectively as optical multiplexers 1105). The optical multiplexers 1105 may be similar to the optical multiplexer 805 in Figure 8. Each of the optical multiplexers 1105 multiplex the modulated optical carrier waves from one of the optical transmitters 1104 together into a single analog optical signal that can be transmitted over a fiber optic transmission link.

The analog optical signals provided by the optical multiplexers 1105 may be transmitted over the optical fiber to a transmission antenna location, where a respective photodetector 1108 converts the optical signal into a corresponding electrical signal. The photodetector 1108 may be similar to the photoreceiver 808 of Figure 8. The electrical signals from the photodetector 1108 may be amplified by power amplifiers 1109. The power amplifier 1109 may be similar to the amplifier 809 of Figure 8. The amplified signals are used to drive transmission antennas 810. The transmission antennas 1110 may be similar to the antenna 810 of Figure 8.

The analog optical transmitter system 1100 may be located remote from the transmission antenna 1110. For example, the analog optical transmitter system 1100 may be located at a base of a cellular tower on which the transmission antenna is located. Additionally or alternatively, the analog transmitter system 1100 may be located remotely from the transmission site. The lasers 1102 may be co-located with the optical transmitters 1104 and optical multiplexers 1105 or may be located separately from other components such as the splitters 1190, optical transmitters 1104, and optical multiplexers 1105. The performance of the lasers 1102 may be more susceptible to changing environmental conditions and as such may be located in a more highly regulated environment to ensure optimal, or at least acceptable operation is maintained. The optical splitters 1190, optical transmitters 1104, and optical multiplexers 1105 may be more robust with regard to sensitivity to environmental conditions and as such may be located in a wider range of locations. The optical splitters 1190, optical transmitters 1104, and optical multiplexers 1105 may located together or separately and may be co-located with the lasers 1102 or may be located separately. For the uplink direction, the optical lasers 1102 may be at the foot of the tower and the optical transmitters 1104 may be at the top of the tower. For the downlink direction, the lasers 1102 may be at a BSC/RNC location similar to 104 of Figure 1 and the optical transmitters 1104 may be at the foot of the tower.

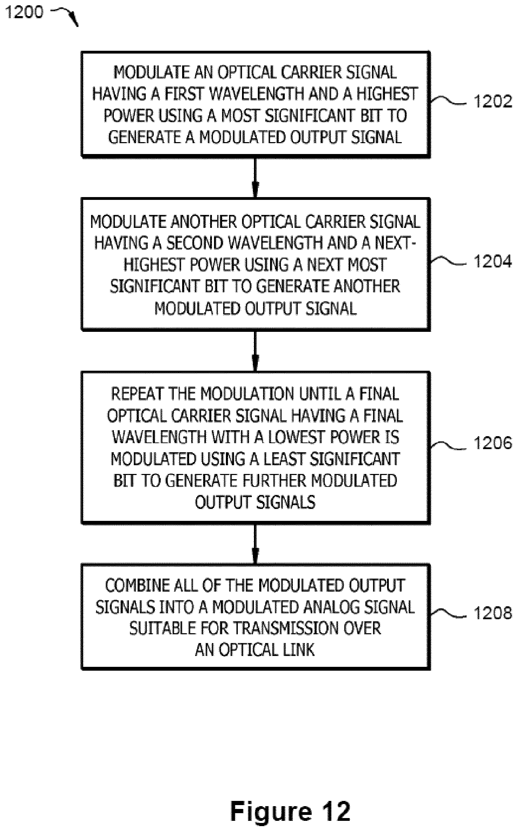

Figure 12 is a method 1200 of optical transmission. The method 1200 may be initiated and performed in order to generate an optical transmission suitable for delivery to a photodetector over an optical fiber. The method 1200 may be implemented by one of the optical transmitters disclosed herein, such as the optical transmitter 804, 904, 1004, 1104 of Figures 8-11. In block 1202, an optical carrier signal having a first wavelength and a highest power is modulated using a most significant bit to generate a modulated output signal. In an embodiment, the modulation is performed by an optical modulator similar to the optical modulator 803, 1003 of Figure 8 and 10. In block 1204, another optical carrier signal having a second wavelength and a next-highest power is modulated using a next most significant bit to generate another modulated output signal. In an embodiment, the modulation is performed by another optical modulator similar to the optical modulator 803, 1003 of Figure 8 and 10. In block 1206, the modulation is repeated, using a further optical modulator, until modulating a final optical carrier signal having a final wavelength with a lowest power using a least significant bit to generate further modulated output signals. In an embodiment, the modulation is performed by a further optical modulator similar to the optical modulator 803, 1003 of Figure 8 and 10. In block 1208, all of the modulated output signals are combined into a modulated analog signal suitable for transmission over an optical fiber. The modulated analog signal may be received by a photodetector, amplified, and then transmitted as an RF signal as described above.

From the foregoing, those skilled in the art will appreciate that a plurality of modulators are arranged in parallel in a multiple channel optical transmitter. Multiple parallel single-wavelength modulated signals are summed and sent through optical fiber to a detector. Analog optical transmitters have proportional relative power relationships, creating parallel transmitted optical signals. As such, a full analog signal is received at the photodetector at the end of the optical fiber. The actual wavelengths of each bit are not important, because at the photoreceiver all of the optical power is simply added. Indeed, the analog signal is determined by adding a sum of the bits corresponding to an optical modulation amplitude at signal frequency and a sum of the bits corresponding to a logic zero optical power at a digital carrier frequency. The optical modulation amplitude of each bit is in a binary sequence at the photoreceiver. In addition, assuming all the modulators are identical, then the optical modulation amplitude is proportional to the optical power into the modulator. The optical power supply or the splitters divide the power into a binary sequence such as, for example, the fractions 1/2, 1/4, 1/8, 1/16, 1/32, 1/64, 1/128, and 1/256 for an eight-bit signal and send one of these powers into each of the modulators.

Although various specific embodiments have been described above, it will be appreciated that the teachings may be readily applied to additional implementations. Further, various physical implementations may be possible depending upon various additional considerations, such as manufacturing requirements and/or capabilities, particular system requirements, as well as other considerations. For example, the lasers may be provided as individual physical components. The optical splitters may be provided as a number of separate components, each that provides, for example, optical splitters for 4 lasers. Alternatively, the optical splitters may be provided on the same photonic chip as the optical modulators. The optical modulators may be provided as individual components that are combined together, or may be provided as a single component that provides the modulation of the signals. Accordingly, one of ordinary skill in the art will readily appreciate that the teachings provided herein may be used to provide numerous different system implementations utilizing the described optical power system to provide conversion of a digital electrical signal to an analog optical signal.

It is to be understood that the singular forms "a", "an" and "the" include plural referents unless the context clearly dictates otherwise. Thus, for example, reference to "a device" includes reference to one or more of such devices, i.e. that there is at least one device. The terms "comprising", "having", "including" and "containing" are to be construed as openended terms (i.e., meaning "including, but not limited to,") unless otherwise noted. All methods described herein can be performed in any suitable order unless otherwise indicated herein or otherwise clearly contradicted by context. The use of examples or exemplary language (e.g. "such as") is intended merely to better illustrate or describe embodiments of the invention and is not intended to limit the scope of the invention unless otherwise claimed.

**Claims**

1. An optical transmitter, comprising:

a first optical modulator (510a) configured to modulate a first optical carrier signal having a first wavelength and a first power using a first data bit to generate a first modulated output signal (514a);
a second optical modulator (510b) configured to modulate a second optical carrier signal having a second wavelength and a second power using a second data bit to generate a second modulated output signal (514b), wherein the second optical modulator and the first optical modulator modulate in parallel; and
an optical wavelength multiplexer (608) operably coupled to the first optical modulator (510a) and the second optical modulator (510b), wherein the optical wavelength multiplexer (608) is configured to sum the first modulated output signal (514a) and the second modulated output signal (514b) into an analog signal (612) suitable for transmission over an optical fiber;
wherein the first optical modulator (510a) receives the first optical carrier signal from a first laser (202a), wherein the second optical modulator (510b) receives the second optical carrier signal from a second laser (202b);
wherein the first wavelength is separated from the second wavelength by at least one hundred gigahertz (GHz), and wherein the second power is one half of the first power;
wherein the first data bit and the second data bit are from a same digital signal comprising a plurality of bits, and wherein the first data bit is a most significant bit and the second data bit is a next most significant bit;
wherein the first optical carrier signal having the first wavelength and the first power is received from a splitter coupled to the first laser (202a) and the second optical carrier signal having the second wavelength and the second power is received from an optical splitter coupled to the second laser (202b).

2. The optical transmitter of claim 1, wherein the first optical modulator is coupled to a first optical input (508a) configured to receive the first optical carrier signal, and wherein the second optical modulator is coupled to a second optical input (508b) configured to receive the second optical carrier signal.

3. The optical transmitter according to claims 1 or 2 comprising:

at least two optical modulators (510), including the first and second optical modulators (510a,b), configured to modulate optical carrier signals, including the first and the second optical carrier signals, wherein each of the optical carrier signals has a different wavelength, and wherein modulation by the optical modulators (510) is performed in parallel on the optical carrier signals from a highest power optical carrier signal corresponding to the first optical carrier signal modulated using the most significant bit of a digital signal through a lowest power optical carrier signal modulated using a least significant bit of the digital signal to generate modulated output signals; and
the optical wavelength multiplexer (608) operably coupled to the optical modulators (510) and configured to sum the modulated output signals into the analog signal suitable for transmission to an analog photoreceiver over an optical fiber.

4. The optical transmitter of claim 3, wherein a number of the optical modulators (510) is equal to a number of the different wavelengths of the optical carrier signals.

5. The optical transmitter of claim 3 or 4, wherein the optical modulators (510) are one of eight-bit modulators, four-bit modulators, and two-bit modulators, and wherein the digital signal is between 8-bits and 2-bits.

6. The optical transmitter of claim 3 or 4, wherein the optical modulators (510) are disposed on a photonic integrated circuit (PIC) operably coupled to a drive signal chip, and wherein the drive signal chip is configured to provide the digital signal to the optical modulators.

7. The optical transmitter of any claim of claims 3-6, wherein the different wavelengths are separated from each other by at least one hundred gigahertz (GHz).

8. A method of optical transmission, the method comprising:

modulating, using one optical modulator, an optical carrier signal having a first wavelength and a highest power using a most significant bit to generate a modulated output signal;
modulating, using another optical modulator, another optical carrier signal having a different wavelength and a next-highest power using a next most significant bit to generate another modulated output signal, wherein the most significant bit and the next most significant bit are from a same digital signal comprising a plurality of bits;
repeating the modulating, using a further optical modulator, until modulating a final optical carrier signal having a final wavelength with a lowest power using a least significant bit to generate further modulated output signals;
combining all of the modulated output signals into a modulated analog signal suitable for transmission over an optical fiber;
performing each modulating step in parallel;
separating the first wavelength from the different wavelength by at least one hundred gigahertz (GHz);
dividing the highest power in half to obtain the next-highest power; and
receiving the optical carrier signal, each of the another optical carrier signals and the final optical carrier signal respectively from an optical splitter coupled to a laser.

**Patentansprüche**

1. Optischer Sender, umfassend:

einen ersten optischen Modulator (510a), der konfiguriert ist, um ein erstes Signal eines optischen Trägers, das eine erste Wellenlänge und eine erste Leistung aufweist, unter Verwendung eines ersten Datenbits zu modulieren, um ein erstes moduliertes Ausgangssignal (514a) zu erzeugen;

einen zweiten optischen Modulator (510b), der konfiguriert ist, um ein zweites Signal des optischen Trägers, das eine zweite Wellenlänge und eine zweite Leistung aufweist, unter Verwendung eines zweiten Datenbits zu modulieren, um ein zweites moduliertes Ausgangssignal (514b) zu erzeugen, wobei der zweite optische Modulator und der erste optische Modulator parallel modulieren; und

einen Multiplexer optischer Wellenlänge (608), der mit dem ersten optischen Modulator (510a) und dem zweiten optischen Modulator (510b) wirkgekoppelt ist, wobei der Multiplexer optischer Wellenlänge (608) konfiguriert ist, um das erste modulierte Ausgangssignal (514a) und das zweite modulierte Ausgangssignal (514b) zu einem analogen Signal (612) zu summieren, das für eine Sendung über eine Lichtleitfaser geeignet ist;

wobei der erste optische Modulator (510a) das erste Signal des optischen Trägers von einem ersten Laser (202a) empfängt, wobei der zweite optische Modulator (510b) das zweite Signal des optischen Trägers von einem zweiten Laser (202b) empfängt;

wobei die erste Wellenlänge von der zweiten Wellenlänge durch wenigstens einhundert Gigahertz (GHz) getrennt ist und wobei die zweite Leistung eine Hälfte der ersten Leistung ist;

wobei das erste Datenbit und das zweite Datenbit von demselben digitalen Signal stammen, das mehrere Bits umfasst, und wobei das erste Datenbit ein höchstwertiges Bit und das zweite Datenbit ein nächstes höchstwertiges Bit ist;

wobei das erste Signal des optischen Trägers, das die erste Wellenlänge und die erste Leistung aufweist, von einem Verteiler empfangen wird, der mit dem ersten Laser (202a) gekoppelt ist, und das zweite Signal des optischen Trägers, das die zweite Wellenlänge und die zweite Leistung aufweist, von einem Verteiler empfangen wird, der mit dem zweiten Laser (202b) gekoppelt ist.

2. Optischer Sender nach Anspruch 1, wobei der erste optische Modulator mit einem ersten optischen Eingang (508a) gekoppelt ist, der konfiguriert ist, um das erste Signal des optischen Trägers zu empfangen, und wobei der zweite optische Modulator mit einem zweiten optischen Eingang (508b) gekoppelt ist, der konfiguriert ist, um das zweite Signal des optischen Trägers zu empfangen.

3. Optischer Sender nach Anspruch 1 oder 2, umfassend:

wenigstens zwei optische Modulatoren (510), einschließlich des ersten und des zweiten optischen Modulators (510a, b), die konfiguriert sind, um Signale des optischen Trägers zu modulieren, einschließlich des ersten und des zweiten Signals des optischen Trägers, wobei jedes der Signale des optischen Trägers eine unterschiedliche Wellenlänge aufweist und wobei eine Modulation durch die optischen Modulatoren (510) an den Signalen des optischen Trägers von einem Signal des optischen Trägers mit höchster Leistung parallel durchgeführt wird, das dem ersten Signal des optischen Trägers entspricht, das unter Verwendung des höchstwertigen Bits eines digitalen Signals durch ein Signal des optischen Trägers mit niedrigster Leistung moduliert wird, das unter Verwendung eines niedrigstwertigen Bits des digitalen Signals moduliert wird, um modulierte Ausgangssignale zu erzeugen; und

den Multiplexer optischer Wellenlänge (608), der mit den optischen Modulatoren (510) wirkgekoppelt und konfiguriert ist, um die modulierten Ausgangssignale zu dem analogen Signal zu summieren, das für die Sendung an einen analogen Lichtempfänger über eine Lichtleitfaser geeignet ist.

4. Optischer Sender nach Anspruch 3, wobei eine Anzahl der optischen Modulatoren (510) gleich einer Anzahl der unterschiedlichen Wellenlängen der Signale des optischen Trägers ist.

5. Optischer Sender nach Anspruch 3 oder 4, wobei die optischen Modulatoren (510) Acht-Bit-Modulatoren, Vier-Bit-Modulatoren oder Zwei-Bit-Modulatoren sind und wobei das digitale Signal zwischen 8-Bits und 2-Bits liegt.

6. Optischer Sender nach Anspruch 3 oder 4, wobei die optischen Modulatoren (510) auf einer photonischen integrierten Schaltung (*photonic integrated circuit* - PIC) angeordnet sind, die mit einem Antriebssignalchip wirkgekoppelt ist, und wobei der Antriebssignalchip konfiguriert ist, um das digitale Signal an die optischen Modulatoren zu liefern.

7. Optischer Sender nach einem der Ansprüche 3-6, wobei die unterschiedlichen Wellenlängen durch wenigstens einhundert Gigahertz (GHz) voneinander getrennt sind.

8. Verfahren für die optische Sendung, das Verfahren umfassend:

Modulieren, unter Verwendung eines optischen Modulators, eines Signals des optischen Trägers, das eine erste Wellenlänge und eine höchste Leistung aufweist, unter Verwendung eines höchstwertigen Bits, um ein moduliertes Ausgangssignal zu erzeugen;

Modulieren, unter Verwendung eines anderen optischen Modulators, eines anderen Signals des optischen Trägers, das eine unterschiedliche Wellenlänge und eine nächsthöchste Leistung aufweist, unter Verwendung eines nächsten höchstwertigen Bits, um ein anderes moduliertes Ausgangssignal zu erzeugen, wobei das höchstwertige Bit und das nächste höchstwertigste Bit von demselben digitalen Signal stammen, das mehrere Bits umfasst;

Wiederholen des Modulierens unter Verwendung eines weiteren optischen Modulators, bis ein endgültiges Signal des optischen Trägers, das eine endgültige Wellenlänge mit einer niedrigsten Leistung aufweist, unter Verwendung eines niedrigstwertigen Bits moduliert wird, um weitere modulierte Ausgangssignale zu erzeugen;

Kombinieren aller modulierten Ausgangssignale zu einem modulierten analogen Signal, das für die Sendung über eine Lichtleitfaser geeignet ist;

paralleles Durchführen jedes Modulationsschritts;

Trennen der ersten Wellenlänge von der unterschiedlichen Wellenlänge um wenigstens einhundert Gigahertz (GHz);

Halbieren der höchsten Leistung, um die nächsthöhere Leistung zu erhalten; und

Empfangen des Signals des optischen Trägers, jedes der anderen Signale des optischen Trägers beziehungsweise des endgültigen Signals des optischen Trägers von einem optischen Verteiler, der mit einem Laser gekoppelt ist.

## Revendications

1. Émetteur optique, comprenant :

   un premier modulateur optique (510a) conçu pour moduler un premier signal de porteuse optique présentant une première longueur d'onde et une première puissance à l'aide d'un premier bit de données pour générer un premier signal de sortie modulé (514a) ;

   un second modulateur optique (510b) conçu pour moduler un second signal de porteuse optique présentant une seconde longueur d'onde et une seconde puissance à l'aide d'un second bit de données pour générer un second signal de sortie modulé (514b), dans lequel le second modulateur optique et le premier modulateur optique modulent en parallèle ; et

   un multiplexeur de longueur d'onde optique (608) couplé de manière fonctionnelle au premier modulateur optique (510a) et au second modulateur optique (510b), dans lequel le multiplexeur de longueur d'onde optique (608) étant conçu pour additionner le premier signal de sortie modulé (514a) et le second signal de sortie modulé (514b) pour former un signal analogique (612) approprié pour être transmis sur une fibre optique ;

   dans lequel le premier modulateur optique (510a) reçoit le premier signal de porteuse optique provenant d'un premier laser (202a), dans lequel le second modulateur optique (510b) reçoit le second signal de porteuse optique provenant d'un second laser (202b) ;

   dans lequel la première longueur d'onde est séparée de la seconde longueur d'onde d'au moins cent gigahertz (GHz), et dans lequel la seconde puissance est la moitié de la première puissance ;

   dans lequel le premier bit de données et le second bit de données provenant d'un même signal numérique comprenant une pluralité de bits, et dans lequel le premier bit de données est le bit le plus significatif et le second bit de données est le bit le plus significatif suivant ;

   dans lequel le premier signal de porteuse optique présentant la première longueur d'onde et la première puissance est reçu d'un séparateur couplé au premier laser (202a), et le second signal de porteuse optique présentant la seconde longueur d'onde et la seconde puissance est reçu d'un séparateur optique couplé au second laser (202b).

2. Émetteur optique selon la revendication 1, dans lequel le premier modulateur optique est couplé à une première entrée optique (508a) conçue pour recevoir le premier signal de porteuse optique, et dans lequel le second modulateur optique est couplé à une seconde entrée optique (508b) conçue pour recevoir le second signal de porteuse optique.

3. Émetteur optique selon la revendication 1 ou 2, comprenant :

   au moins deux modulateurs optiques (510), comprenant les premier et second modulateurs optiques (510a, b), conçus pour moduler des signaux de porteuse optique, comprenant les premier et second signaux de porteuse optique, dans lequel chacun des signaux de porteuse optique présente une longueur d'onde différente, et dans lequel la modulation par les modulateurs optiques (510) est effectuée en parallèle sur les signaux de porteuse optique à partir d'un signal de porteuse optique de puissance la plus élevée correspondant au premier signal de porteuse optique modulé à l'aide du bit le plus significatif d'un signal numérique au moyen d'un signal de porteuse optique de puissance la plus faible modulé à l'aide d'un bit le moins significatif du signal numérique pour générer des signaux de sortie modulés ; et

le multiplexeur de longueur d'onde optique (608) couplé de manière fonctionnelle aux modulateurs optiques (510) et conçu pour additionner les signaux de sortie modulés pour former le signal analogique approprié pour être transmis à un photorécepteur analogique sur une fibre optique.

4. Émetteur optique selon la revendication 3, dans lequel un nombre des modulateurs optiques (510) est égal à un nombre des différentes longueurs d'onde des signaux de porteuse optique.

5. Émetteur optique selon la revendication 3 ou 4, dans lequel les modulateurs optiques (510) sont des modulateurs à huit bits et/ou des modulateurs à quatre bits et/ou des modulateurs à deux bits, et dans lequel le signal numérique est compris entre 8 bits et 2 bits.

6. Émetteur optique selon la revendication 3 ou 4, dans lequel les modulateurs optiques (510) sont disposés sur un circuit intégré photonique (PIC) couplé de manière fonctionnelle à une puce de signal de commande, et dans lequel la puce de signal de commande est conçue pour fournir le signal numérique aux modulateurs optiques.

7. Émetteur optique selon l'une quelconque des revendications 3 à 6, dans lequel les différentes longueurs d'onde sont séparées les unes des autres d'au moins cent gigahertz (GHz).

8. Procédé de transmission optique, ledit procédé comprenant :

la modulation, à l'aide d'un modulateur optique, d'un signal de porteuse optique présentant une première longueur d'onde et la puissance la plus élevée à l'aide du bit le plus significatif pour générer un signal de sortie modulé ;

la modulation, à l'aide d'un autre modulateur optique, d'un autre signal de porteuse optique présentant une longueur d'onde différente et une puissance la plus élevée suivante à l'aide du bit le plus significatif suivant pour générer un autre signal de sortie modulé, dans lequel le bit le plus significatif et le bit le plus significatif suivant proviennent d'un même signal numérique comprenant une pluralité de bits ;

la répétition de la modulation, à l'aide d'un autre modulateur optique, jusqu'à la modulation d'un signal de porteuse optique final présentant une longueur d'onde finale à la puissance la plus basse à l'aide d'un bit moins significatif pour générer des signaux de sortie modulés supplémentaires ;

la combinaison de tous les signaux de sortie modulés pour former un signal analogique modulé approprié pour être transmis sur une fibre optique ;

la réalisation de chaque étape de modulation en parallèle ;

la séparation de la première longueur d'onde de la longueur d'onde différente d'au moins cent gigahertz (GHz) ;

la division de la puissance la plus élevée en deux de façon à obtenir la puissance la plus élevée suivante ; et

la réception du signal de porteuse optique, de chacun des autres signaux de porteuse optique et du signal final de porteuse optique respectivement d'un séparateur optique couplé à un laser.

100

**Figure 1**

Figure 2

**Figure 3**

Figure 4

MSB          LSB

Signal S0: (1010)

4

510a     SO₀: 1     512a

508a 〜 50%     MZ Modulator     50%*('1' level)   〜514a
510b     SO₁: 0     512b

508b 〜 25%     MZ Modulator     25%*('0' level)   〜514b
510c     SO₂: 1     512c

508c 〜 12.5%     MZ Modulator     12.5%*('1' level)   〜514c
510d     SO₃: 0     512d

508d 〜 6.25%     MZ Modulator     6.25%*('0' level)〜514d

Signal S0

4 (1010)

Optical Modulator
506

# Figure 5

**Figure 6**

Data Inputs (x8)

710

High Power Laser

High Power Laser

High Power Laser

High Power Laser

702

High Power Laser

High Power Laser

High Power Laser

High Power Laser

Optical
Splitters

Connection
Matrix

Optical
Modulation

Optical
Mux

Transmission
Lines

714

704

706

708

712

Figure 7

EP 3 245 748 B1

Figure 8

Figure 9

EP 3 245 748 B1

Figure 10

Figure 11

1200

```
┌─────────────────────────────────────────┐
│  MODULATE AN OPTICAL CARRIER SIGNAL      │
│  HAVING A FIRST WAVELENGTH AND A HIGHEST │ ── 1202
│  POWER USING A MOST SIGNIFICANT BIT TO   │
│  GENERATE A MODULATED OUTPUT SIGNAL      │
└─────────────────────────────────────────┘
                    │
                    ▼
┌─────────────────────────────────────────┐
│  MODULATE ANOTHER OPTICAL CARRIER SIGNAL │
│  HAVING A SECOND WAVELENGTH AND A NEXT-  │
│  HIGHEST POWER USING A NEXT MOST         │ ── 1204
│  SIGNIFICANT BIT TO GENERATE ANOTHER     │
│  MODULATED OUTPUT SIGNAL                 │
└─────────────────────────────────────────┘
                    │
                    ▼
┌─────────────────────────────────────────┐
│  REPEAT THE MODULATION UNTIL A FINAL     │
│  OPTICAL CARRIER SIGNAL HAVING A FINAL   │
│  WAVELENGTH WITH A LOWEST POWER IS       │ ── 1206
│  MODULATED USING A LEAST SIGNIFICANT     │
│  BIT TO GENERATE FURTHER MODULATED       │
│  OUTPUT SIGNALS                          │
└─────────────────────────────────────────┘
                    │
                    ▼
┌─────────────────────────────────────────┐
│  COMBINE ALL OF THE MODULATED OUTPUT     │
│  SIGNALS INTO A MODULATED ANALOG SIGNAL  │ ── 1208
│  SUITABLE FOR TRANSMISSION OVER          │
│  AN OPTICAL LINK                         │
└─────────────────────────────────────────┘
```

Figure 12

## REFERENCES CITED IN THE DESCRIPTION

**Patent documents cited in the description**

- US 2010215273 A1
- US 8588556 B1
- US 2014133868 A1
- US 2014321864 A1